Europäisches Patentamt

European Patent Office

Office européen des brevets

(19)

(11) Veröffentlichungsnummer: **0 277 256**
A1

## (12) EUROPÄISCHE PATENTANMELDUNG

(21) Anmeldenummer: 87101537.6

(22) Anmeldetag: 05.02.87

(51) Int. Cl.⁴: **E04B 1/49** , E04C 3/18 , F16B 15/00

(43) Veröffentlichungstag der Anmeldung:
10.08.88 Patentblatt 88/32

(84) Benannte Vertragsstaaten:
AT DE FR GB IT SE

(71) Anmelder: **Johann Wolf GmbH KG**
**Mühldorf 86**
**A-4644 Scharnstein(AT)**

(72) Erfinder: **Wolf, Johann**
**Mühldorf 86**
**A-4644 Scharnstein(AT)**

(74) Vertreter: **Seeger, Wolfgang, Dipl.-Phys.**
**SEEGER & SEEGER Patentanwälte &**
**European Patent Attorneys**
**Gottfried-Böhm-Ring 27**
**D-8000 München 70(DE)**

(54) Nagelplatte.

(57) Nagelplatte (10), insbesondere zur Verbindung von Holzteilen, bestehend aus einer Blechplatte (10) und in mehreren Reihen angeordneten, aus zungenförmigen Einstanzungen (12) gebildeten Nägeln, dadurch gekennzeichnet, daß die Einstanzungen (12) parallel zu den Längsrändern (16, 18) der Platte angeordnet sind und der vordere Rand (30) und/oder der hintere Rand (32) der Nagelplatte (10) treppenartig ausgebildet sind.

Fig 1

## Nagelplatte

Die Erfindung betrifft eine Nagelplatte, insbesondere zur Verbindung von Holzteilen, bestehend aus einer Blechplatte und in mehreren Reihen angeordneten, aus zungenförmigen Einstanzungen gebildeten Nägeln.

Eine Nagelplatte dieser Art ist aus der EPÜ-Anmeldung 85 89 0234.9 bekannt. Bei dieser bekannten Nagelplatte sind die einzelnen Einstanzungen, aus denen die Nägel gebildet sind, parallel zu den Längsseiten der rhombusförmigen Platten, und die Fußpunkte der Nägel sind parallel zu der Stoßfuge der zu verbindenden Balken gebildet.

Nachteilig an dieser Ausführung hat sich die parallele Anordnung der Nägel zur Stoßfuge erwiesen, da diese Ausrichtung eine mit der verlaufenden Holzfaserung etwa übereinstimmende Richtung ergibt und die Sprengwirkung in der Nagelreihe um so größer wird, je stärker die Übereinstimmung der Holzfaserung mit der Nagelreihe zunimmt. Bei schwellenden oder schwingenden Lasten und bei Spitzenbelastungen besteht im geschilderten Fall die Gefahr, daß sich die Nägel lockern und die Tragfähigkeit der Platte dadurch vermindert wird.

Nachteilig an der bekannten Nagelplatte ist auch die Tatsache, daß ihre Herstellung recht kostenaufwendig ist. Das liegt daran, daß dann, wenn die Platte bei ihrer Herstellung längs den parallel zur Stoßfuge ausgerichteten Seiten durchgezogen wird, die schrägen Seiten zwangsläufig einen Verschnitt und damit Materialverlust hervorrufen. Will man, um diesen Verschnitt zu vermeiden, bei der Anbringung der Stanzungen die Platten in Richtung der schrägen Seitenränder durchziehen, so müssen die einzelnen Stempel des Stanzwerkzeugs gestaffelt angeordnet werden, wodurch sich ein aufwendiger Aufbau desselben ergibt.

Schließlich weist die bekannte Nagelplatte auch den Nachteil auf, daß sie im Bereich ihrer Mittelzone keine Nägel enthält, so daß ein nicht unwesentlicher Teil der Nagelplatte nicht zur Verbindungswirkung beitragen kann.

Aufgabe der vorliegenden Erfindung ist es, ausgehend von dem eingangs genannten Stand der Technik, ein Nagelplatte zu schaffen, die eine besonders große Halftwirkung aufweist und kostengünstig herstellber ist.

Diese Aufgabe ist gemäß der Erfindung dadurch gelöst, daß bei einer Nagelplatte, bestehend aus einer Blechplatte und in mehreren Reihen angeordneten, aus zungenförmigen Einstanzungen gebildeten Nägeln, die Einstanzungen parallel zu den Längsrändern der Platte angeordnet sind und daß der vordere Rand und der hintere Rand im wesentlich schräg zu den Langsrändern ausgebildet sind. Vorzugsweise sind der vordere Rand und/oder der hintere Rand der Nagelplatte treppenartig ausgebildet sind.

Die Erfindung weist eine Vielzahl von Vorteilen auf:

Zunächst ist der Vorteil zu nennen, daß die Fußpunktreihen der Nägel nicht parallel zu der Faserung der miteinander durch die Nagelplatte zu verbindenden Balken verläuft. Wird diese Nagelplatte nämlich mit ihren seitlichen Rändern etwa parallel zu der Stoßfuge zweier miteiander zu verbindender Balken angeordnet, so verlaufen sowohl die Reihen der Nagelfußpunkte, die quer auf der Nagelplatte angeordnet sind, als auch die Reihen von Nagelfußpunkten, die parallel zu den Längsseiten der Nagelplatte angeordnet sind, - schräg zu der Stoßfuge der miteinander zu zu verbindenden Balken. Auch die einzelnen flachen Nägel verlaufen mit ihrer breiten Seite schräg zu der Stoßfuge. Dadurch wird die die Haftwirkung der Nagelreihe vergößert und die Gefahr der Lockerung der Verbindung bei schwingenden Lassten und bei Spitzenbelsatungen erheblich verringert.

Hinzu kommt der Vorteil, daß die Haftwirkung der Nagelplatte auch deshalb erheblich größer als bei der bekannten Nagelplatte ist, weil auf der gesamten Fläche der Nagelplatte Nägel gestanzt sind, so daß mehr Nägel zur Erzielung der Haftwirkung vorhanden sind.

Schließlich ist auch der Vorteil zu nennen, daß diese Nagelplatte besonders kostengünstig herstellbar ist, worauf weiter unten noch eingegangen werden wird.

Der vordere Rand und der hintere Rand der Nagelplatte können von einem Seitenrand zum anderen Seitenrand hin gleichsinnig ansteigend oder abfallend treppenartig ausgebildet sein. Diese Ausbildungsform bringt den Vorteil mit sich, daß die Nagelplatte in ihrem Außenumfang etwa rhombusförmig ausgebildet ist, wordurch die damit verbundenen Vorteile erzielt werden.

Nach einer anderen Ausbildungsform der Erfindung sind die Stufen des vorderen Randes der Nagelplatte relativ zueiander jeweils in gleichen Abständen wie die Stufen des hinteren Randes relativ zueinander ausgebildet. Diese Ausbildungsform der Erfindung weist zum einen den Vorteil auf, daß die Nagelplatten kostengünstig hergestellt werden können, weil die treppenförmigen Schnitte jeweils mit demselben Werkzeug druchgeführt werden können. Hinzu kommt der Vorteil, daß diese Nagelplatten, wenn es zweckmäßig oder gar erforderlich ist, jeweils direkt nebeneinander, ohne Abstand zwischeneinander, angeordnet werden können.

Nach einer weiteren Ausführungsform der Erfindung sind seitlich benachbarte Einstanzungen jeweils gegensinnig ausgerichtet. Diese Weiterbildung bringt den Vorteil mit sich, daß die Nagelplatte selber ein Höchstmaß an Stabilität beibehält.

Zweckmäßigerweise sind die Fußpunkte von den Einstanzungen der Nägel einer sich quer von einem Seitenrand zum anderen erstreckenden Nagelreihe von den Fußpunkten der zwischen Ihnen angeordneten, gegensinnig ausgebildeten Einstanzungen um einen Abstand entfernt sind, der größer als die Länge der Einstanzungen ist. Auch diese Asubildungsform der Erfindung trägt dazu bei daß ein Höchstmaß and Stabilität der Nagelplatte beibehalten wird. Dadurch wird der weitere Vorteil erzielt, daß die Nagelplatte aus relativ dünnenm Blech bestehen kann, wodurch wiederum die Kosten der Nagelplatte niedrig gehalten werden.

Die Abstände der Reihen von gleichsinnig ausgerichteten Einstanzungen können jeweils gleich groß sein.

Die Fußpunkte einer Reihe von Einstanzungen können jeweils zwischen zwei Reihen von Fußpunkten von gegensinnig ausgerichteten Einstanzungen liegen. Dadurch wird die Ausbildung einer maximalen Anzahl von Nägeln pro Nagelplattenfläche bei gleichzeitiger Beibehaltung eines Höchstmaßes an Stabilität erzielt.

In den Schutzumfang der vorliegendenAnmeldung fällt auch das Verfahren zur Herstellung einer Nagelplatte. Dieses Verfahren ist dadurch gekennzeichnet, daß in ein vorlaufendes Blechband Reihe um Reihe, quer zu dem Band zungenförmige Stanzungen durchgeführt und die Zungen zu Nägel umgebogen werden, und daß nach Ausbildung einer Anzahl von Nagelreihen das Band treppenförmig durchtrennt wird.

Dieses Verfahren ist besonders kostengünstig, weil kein Band-oder Plattenverschnitt auftritt. Hinzu kommt der Vorteil, daß dieses Verfahren mit einfachen Werkzeugen durchgeführt werden kann, weil die einzelnen Stanzwerkzeuge nebeneinander angeordnet sind. Dieser Vorteil der kostengünstigen Herstellung ist von besonderer Bedeutung, weil Nagelplatten einen Massenartikel darstellen.

Auch die Fertigung rechter und linker Nagelpaltten, d.h. von Nagelplatten mit nach links bzw. mit nach rechts ansteigendem Schnitt, ist gemäß der Erfindung besonders einfach. Es können nämlich dieselben Stanzwerkzeuge verwendet werden, nur der Trennschnitt muß umgesetzt werden.

In den Schutzumfang der vorliegenden Erfindung fällt schließlich auch die Anwendung einer erfindungsgemäßen Nagelplatte. Gemäß der Erfindung wird die Nagelplatte so eingesetzt, daß die treppenförmigen vorderen und hintere Seite der Platte im wesentlichen parallel zu der Stoßfuge der miteinander zu verbindenden Holzteil angeordnet sind. Durch diese Anwendung der Nagelplatte wird eine besonders große und dauerhafte Haftwirkung erzielt.

Die Erfindung ist im folgenden anhand einiger Ausführungsbeispiele und in Verbindung mit der Zeichnung näher beschrieben. Im einzelnen zeigen:

Fig. 1 Eine erfindungsgemäß Nagelplatte in Draufsicht, mit gestanzten, aber in der Mehrzahl noch nicht umgebogenen zungenförmigen Nägeln,

Fig. 2 einen aus zwei Balken, mit der erfindungsgemäßen Nagelplatte hergestellten Verbundträger, und

Fig. 3 eine Dachbalkenkonstruktion unter Verwendung erfindungsgemäßer Nagelplatten.

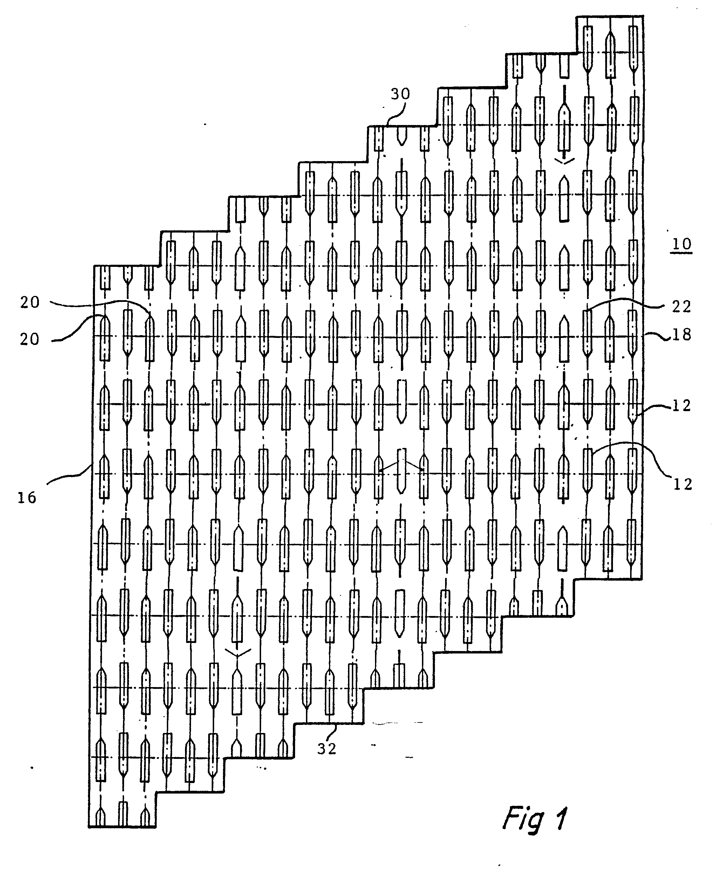

Die Figur 1 zeigt eine Draufsicht auf eine erfindungsgemäße Nagelplatte 10.

Die Stanzungen 12 sind parallel zu den Längsrändern 16 bzw. 18 der Platte 10 ausgerichtet, und die durch den Stanzvorgang erzeugten Zungen sind umgebogen, so daß sie Nägel bilden. Abwechselnd ist immer eine Stanzungsreihe in einem Sinne, parallel zu den Seitenrändern 16 und 18 ausgerichtet, und die in Richtung der Seitenränder nächst folgende Reihe von Stanzungen ist gegensinnig ausgerichtet. Diese Stanzungen sind so angeordnet, daß die Spitzen 20 von einer Reihe von Stanzungen sich zwischen zwei gegensinnig ausgebildete Stanzungen erstrecken. Der Abstand der Fußpunkte 24 der einen Reihe von Stanzungen ist jedoch von den Fußpunkten 26 der mit ihr verschachtelten Stanzungen so weit entfernt, daß die Spitzen 20 jeweils auf einer Querreihe angeordnet sind, die sich zwischen den Fußpunktreihen zweier ineinander verschachtelten Reihen erstrecken. Auf diese Weise ist der Bereich zwischen zwei Fußpunkten 24,24 und 26,26 durch keine Stanzung unterbrochen. Dadurch wird eine besonders hohe Stabilität der Nagelplatte erzielt.

Der vordere Rand 30 und der hintere Rand 32 der Nagelplatte sind treppenförmig, von links unten nach rechts oben ansteigend, ausgebildet. Dieser Ausführungsform der Erfindung bringt den erwünschten Effekt, daß die Nagelplatte 10 selber in ihrem Außenumfang angenähert rhombusförmig ausgebildet ist.

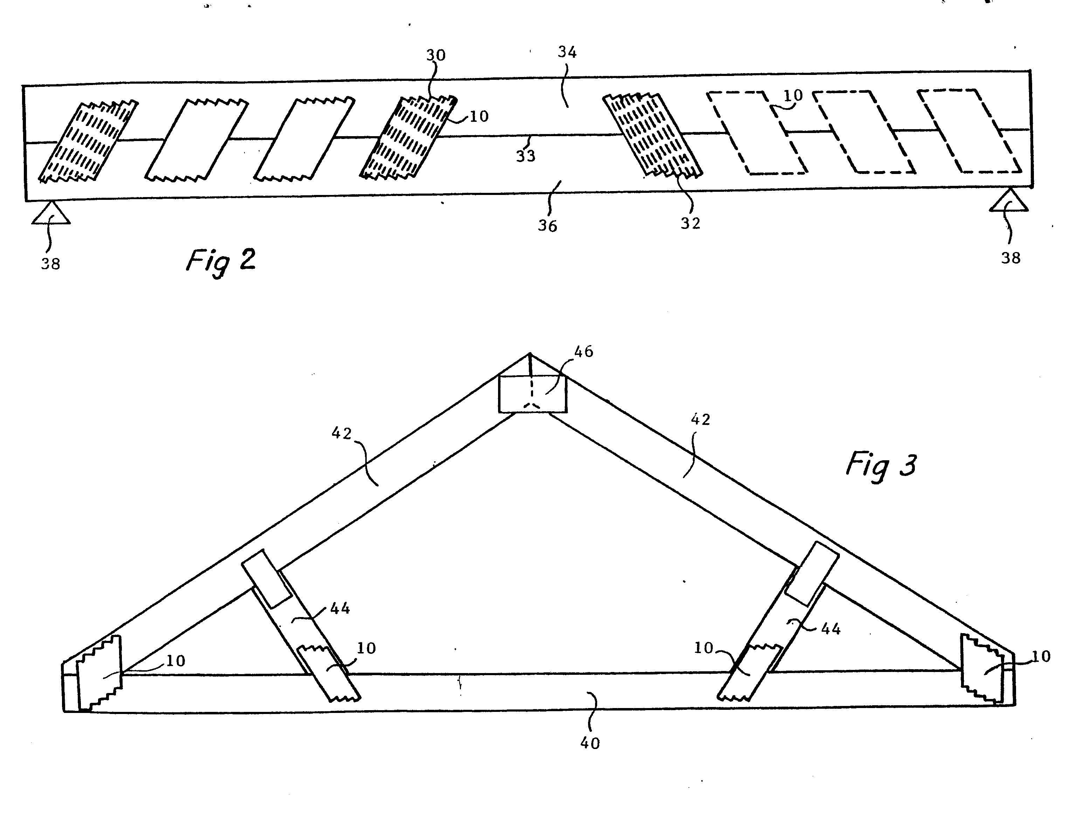

In der Fig. 2 sieht man einen Verbundträger, der aus zwei Balken 34 und 36 besteht, die durch die erfindungsgemäße Nagelplatten 10 miteinander verbunden sind. Die Tragkeile 38 zeigen zwei Auflager, auf welchen der Verbundträger mit seinen beiden Enden aufliegt.

Wie man in dieser Figur 2 sieht, sind die erfindungsgemäßen Nagelplatten 10 so an die beiden Balken angenagelt, daß die treppenförmigen vorderen und hinteren Ränder 30 bzw. 32 der Nagelplatte etwa parallel zu der Stoßfuge 33 zwischen den beiden miteinander verbundenen Balken 34 und 36 angeordnet sind. Bei dieser Anordnung verlaufen sowohl die Nagelreihen, die sich parallel zu der Längsseite 16 bzw. 18 der Nagelplatte 10 erstrecken, als auch die quer zur Nagelplatte verlaufenden Reihen von Nägeln schräg zu der Stoßfuge 33. Dadurch wird eine besonders große Haftwirkung erzielt.

Wie man außerdem sowohl durch einen Blick auf die Fig. 1 als auch auf die Fig. 2 sieht, steht der gesamte Flächenbereich der Nagelplatte 10 zur Anbringung von Nägeln zur Verfügung. Dadurch wird die Haftwirkung von des Verbundträgers besonders groß.

Die Fig. 3 zeigt eine Dachbalkenkonstruktion aus einem Träger 40 und zwei Giebelbalken 42 und zwei weiteren Schrägstützen 44. Der Träger 40 und die Giebelblaken 42 sind jeweils durch Nagelplatten 10 gemäß der vorliegenden Erfindung miteinander verbunden. Auch der Querträger 40 und die Schrägstützen 44 sind jeweils durch erfindungsgemäße Nagelplatten 10 eng miteinander verbunden. Wie man in dieser Figur sieht, können die erfindungsgemäßen Nagelplatten 10 auch zusammen mit anderen Nagelplatten 46 zur Herstellung von Verbundkonstruktionen verwendet werden.

Die vorliegende Erfindung erlaubt eine Vielzahl von ähnlichen Ausführungsformen der Nagelplatte und eine Vielzahl von vorteilhaften Anwendungen, die sich für den Durchschnitsfachmann aus der obigen Beschreibung ergeben. Solche Ausführungsformen fallen in den Schutzumfang der vorliegenden Erfindung.

## Ansprüche

1. Nagelplatte, insbesondere zur Verbindung von Holzteilen, bestehend aus einer Blechplatte (10) und in mehreren Reihen angeordneten, aus zungenförmigen Einstanzungen (12) gebildeten Nägeln, dadurch gekennzeichnet, daß die Einstanzungen (12) parallel zu den Längsrändern (16, 18) der Platte (10) angeordnet sind und daß der vordere Rand (30) und der hintere Rand (32) im wesentlich schräg zu den Langsrändern ausgebildet sind.

2. Nagelplatte nach Anspruch 1, dadurch gekennzeichnet, daß der vordere Rand (30) und/oder der hintere Rand (32) der Nagelplatte (10) treppenartig ausgebildet sind.

3. Nagelplatte nach Anspruch 1, dadurch gekennzeichnet, daß der vordere Rand (30) und der hintere Rand (32) der Nagelplatte (10) von einem Seitenrand (16) zum anderen Seitenrand (18) gleichsinnig ansteigend oder abfallend treppenartig ausgebildet ist.

4. Nagelplatte nach einem der vorhergehenden Ansprüche, dadurch gekennzeichnet, daß die Stufen des vorderen Randes (30) der Nagelplatte (10) relativ zueiander jeweils die gleichen Abstände wie die Stufen des hinteren Randes (32) relativ zueinander aufweisen.

5. Nagelplatte nach einem der vorhergehenden Ansprüche, dadurch gekennzeichnet, daß seitlich benachbarte Einstanzungen (12) jeweils gegensinnig ausgerichtet sind.

6. Nagelplatte nach einem der vorhergehenden Ansprüche, dadurch gekennzeichnet, daß die Fußpunkte von den Einstanzungen (12) der Nägel einer sich quer von einem Seitenrand zum anderen erstreckenden Nagelreihe von den Fußpunkten der zwischen ihnen angeordneten, gegensinnig ausgebildeten Einstanzungen (12) um einen Abstand entfernt sind, der größer als die Länge der Einstanzungen (12) ist.

7. Nagelplatte nach einem der vorhergehenden Ansprüche, dadurch gekennzeichnet, daß die Abstände der Reihen von gleichsinning ausgerichteten Einstanzungen (12) jeweils gleich groß sind.

8. Nagelplatte nach einem der vorhergehenden Ansprüche, dadurch gekennzeichnet, daß die Fußpunkte einer Reihe von Einstanzungen (12) jeweils zwischen zwei Reihen von Fußpunkten von gegensinnig ausgerichteten Eintanzungen (12) liegen.

9. Verfahren zur Herstellung einer Nagelplatte, dadurch gekennzeichnet, daß in ein vorlaufendes Blechband Reihe um Reihe quer zu dem Band zungenförmige Stanzungen durchgeführt und die Zungen zu Nägel umgebogen werden, und daß nach Asubildung einer Reihe von Nagelreihen das Band treppenförmig durchtrennt wird.

10. Anwendung einer Nagelplatte (10) nach einem der vorhergehenden Ansprüche, dadurch gekennzeichnet, daß die Nagelplatte (10) so eingesetzt wird, daß die treppenförmigen vorderen und hintere Seiten der Platte (10) im wesentlichen parallel zu der Stoßfuge der miteinander zu verbindenen Holzteil angeordnet sind.

*Fig 1*

Fig 2

Fig 3

0 277 256

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 181 854 (J. WOLF GMBH)<br><br>* Figuren 1-3; Ansprüche 1, 2, 9 * | 1,5,7,8,10 | E 04 B 1/49<br>E 04 C 3/18<br>F 16 B 15/00 |
| D,A | --- | 2-4,6 | |
| Y | WO-A-8 102 759 (M. KARHUMÄKI et al.)<br>* Figuren 1, 2, 8, 11; Seite 4, Zeilen 12-31; Seite 6, Zeilen 15-29 * | 1,5,7,8,10 | |
| A | ----- | 9 | RECHERCHIERTE SACHGEBIETE (Int. Cl.4)<br><br>E 04 B 1/00<br>E 04 C 3/00<br>F 16 B 15/00 |

Der vorliegende Recherchenbericht wurde für alle Patentansprüche erstellt.

| Recherchenort | Abschlußdatum der Recherche | Prüfer |
|---|---|---|
| BERLIN | 13-08-1987 | BOUSQUET K.C.E. |